# FASCICULE DE BREVET EUROPEEN

(11) **EP 1 041 737 B1**
(45) Date de publication et mention de la délivrance du brevet: **29.08.2007**
(21) Numéro de dépôt: 00400873.6
(22) Date de dépôt: 30.03.2000
(51) Int. Cl.: H04B 7/185

(54) **Noeud et station embarquée permettant d'établir à tout moment une communication vers un passager d'un véhicule**
Knoten und Station an Bord eines Fahrzeuges zur Verbindungsaufnahme mit einem Fahrzeuginsassen
Node and onboard station allowing at any time to initiate communication with a vehicle passenger

(30) Priorité: 31.03.1999 FR 9904060
(43) Date de publication de la demande: 04.10.2000
(60) Demande divisionnaire: 06116590.8
(73) Titulaire: Alcatel Lucent, 75008 Paris (FR)
(72) Inventeur: Roux, Raphael, 95100 Argenteuil (FR)
(74) Mandataire: Sciaux, Edmond

(56) Documents cités:
- EP-A- 0 491 497
- WO-A-98/21838
- WO-A-98/26521
- GB-A- 2 310 973
- US-A- 4 774 514
- US-A- 5 543 779

## Description

L'invention concerne principalement un système permettant d'établir à tout moment une communication avec un passager d'un véhicule. Actuellement il est possible d'établir à tout moment une communication avec un particulier abonné à un réseau de radiotéléphonie par satellite, et muni d'un terminal portable, à condition que son terminal puisse recevoir et émettre des signaux radio-élecriques. Or il n'est pas possible d'utiliser un terminal portable à bord d'un avion, ou d'autres véhicules, dont les parois font obstacle aux signaux radio-élecriques.

Des systèmes connus permettent d'établir une communication téléphonique à partir d'un avion, vers le sol, mais ne permettent pas d'établir une communication téléphonique à partir du sol vers un avion, parce qu'ils ne savent pas localiser un passager donné, même si celui-ci est abonné à un réseau radiotéléphonique. d'autre part, ces systèmes connus mettent en oeuvre des liaisons radio avec des stations terrestres qui ne desservent qu'une petite fraction de la surface du globe terrestre. En outre, ces systèmes connus ne permettent pas d'utiliser les terminaux radiotéléphoniques classiques que possèdent beaucoup de passagers. Ils ne permettent pas non plus d'utiliser des terminaux de données.

Un premier but de l'invention est de proposer un système permettant d'établir, à tout instant, une communication téléphonique, ou de données, à partir du sol vers un passager d'un avion, ou inversement. Le document WO 98/26521 décrit un tel système.

Un premier objet de l'invention est un noeud permettant d'établir à tout moment une communication vers un passager d'un véhicule, ce véhicule comportant une station embarquée permettant de coupler des terminaux vocaux et des terminaux de données à un réseau de satellites ;
caractérisé en ce qu'il comporte un réseau intermédiaire comportant au moins un noeud muni de moyens couplés au réseau de satellites et à au moins à un réseau de télécommunication terrestre, pour associer, pour chaque passager d'un véhicule, un numéro d'annuaire de réseau de télécommunication terrestre à un numéro d'annuaire du réseau de satellites.

Le noeud ainsi caractérisé permet d'établir une communication vers un passager parce qu'il permet au réseau de satellites de voir ce passager comme un abonné de ce réseau de satellites, bien qu'il ne soit pas un véritable abonné du réseau de satellites ; et parce qu'il permet à un réseau radiotéléphonique terrestre ou un réseau fixe terrestre de voir ce passager comme un abonné d'un réseau terrestre, et de le joindre, bien qu'en fait il soit inaccessible par les terminaux des réseaux fixes, et par les stations de base des réseaux radiotéléphoniques terrestres aussi longtemps qu'il est dans le véhicule.

Selon un mode de réalisation préférentiel, ce noeud est caractérisé en ce que, pour associer un numéro d'annuaire de réseau de télécommunication radiotéléphonique terrestre à un numéro d'annuaire du réseau de satellites, il comporte :
- au moins un simulateur de station de base couplé à ce réseau de radiotéléphonie terrestre, pour simuler le comportement d'une station de base fictive de ce réseau de radiotéléphonie terrestre,
- et n simulateurs de terminaux mobiles, couplés à ce simulateur de station de base, pour simuler le comportement de n terminaux mobiles qui resteraient en permanence dans la zone de cette station de base, et qui correspondent à n passagers du véhicule; ces n simulateurs étant couplés à la station embarqués, par le réseau de satellites ; ces n simulateurs pouvant être appelés respectivement, via le réseau radiotéléphonique terrestre en utilisant le numéro d'annuaire de ces n passagers ; et ces n simulateurs retransmettant des appels respectivement vers n numéros d'abonné, du réseau de satellites, respectivement associés à ces n numéros d'annuaire.

Le noeud ainsi caractérisé permet d'établir une communication vers un passager désigné par son numéro d'annuaire dans un réseau radiotéléphonique terrestre parce qu'il permet réseau radiotéléphonique terrestre de voir ce passager comme un abonné mobile, bien qu'en fait il soit inaccessible par les stations de base des réseaux radiotéléphoniques terrestres aussi longtemps qu'il est dans le véhicule.

Un deuxième objet de l'invention est une station embarquée permettant d'établir à tout moment une communication vers un passager d'un véhicule, cette station permettant de coupler, des terminaux vocaux et des terminaux de données situés dans le véhicule, à un réseau de satellites qui est lui-même couplé à un réseau de radiotéléphonie terrestre ;
caractérisée en ce qu'elle comporte :
- des moyens pour mémoriser les numéros d'annuaire de passagers du véhicule, qui sont abonnés à un réseau de radiotéléphonie terrestre, et leurs associer respectivement des numéros d'abonné du réseau de satellites ;
- et des moyens pour router un appel vers un passager, en fonction d'un numéro, d'abonné du réseau de satellites, qui est utilisé pour adresser cet appel.

La station embarquée ainsi caractérisée permet d'établir, à tout instant, une communication téléphonique à partir du sol vers un passager d'un avion, parce qu'elle permet au réseau de satellites de voir chaque passager comme un abonné du réseau de satellites, alors qu'il n'est pas un véritable abonné de ce réseau de satellites, et qu'il est seulement connu comme un abonné à un réseau de radiotéléphonie terrestre.

Un autre but de l'invention est de permettre l'utilisation des radiotéléphones classiques à bord des avions, tout en évitant qu'un passager négligent ou distrait laisse fonctionner son radiotéléphone pendant les phases de décollage et d'atterrissage.

Un troisième objet de l'invention est un dispositif pour détecter la présence d'un terminal radiotéléphonique en fonctionnement ; caractérisé en ce qu'il comporte des moyens pour recevoir les signaux émis par un tel terminal, et des moyens pour donner une alarme lorsqu'il détecte ces signaux.

L'invention sera mieux comprise et d'autres caractéristiques apparaîtront à l'aide de la description ci-dessous et des figures l'accompagnant :
- **La figure 1** représente un schéma synoptique qui illustre l'utilisation d'un système pour communiquer avec des avions, ce système comportant des noeuds et des stations embarquées selon l'invention.
- La figure 2 représente le schéma synoptique d'un exemple de réalisation du noeud selon l'invention.
- La figure 3 représente le schéma synoptique d'un exemple de réalisation de la station embarquée selon l'invention, installée à bord d'un avion.

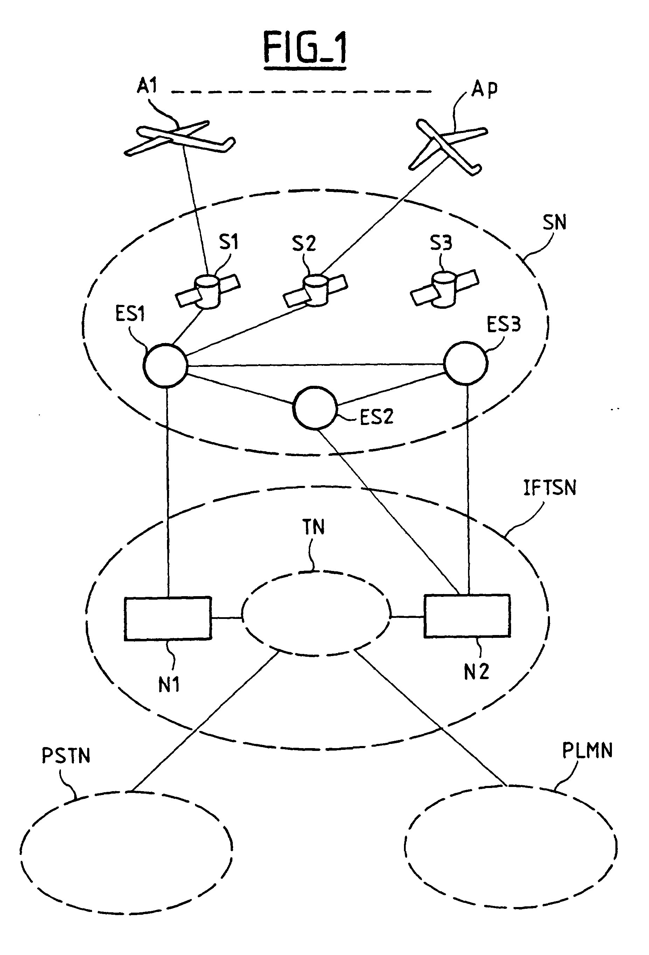

**La figure 1** représente un schéma synoptique qui illustre l'utilisation d'un système pour communiquer avec des passagers dans des avions, ce système comportant des noeuds et des réseaux locaux selon l'invention. Pour pouvoir bénéficier du service de télécommunication et des services de distractions à bord, un passager doit être joignable au moyen d'un numéro d'annuaire. Plusieurs procédés pour le rendre joignable seront décrits plus loin. Il n'est pas indispensable que le passager soit déjà abonné à un réseau téléphonique fixe ou à un réseau radiotéléphonique terrestre.

Ce système comprend essentiellement : une station embarquée (non représentée sur la figure 1) dans chaque avion A1 ... , Ap ; un réseau SN de satellites de télécommunication, de type connu, ayant une couverture mondiale, tel que le réseau commercialisé sous le nom d'Irridium ; et un réseau intermédiaire IFTSN, qui est couplé : au réseau de satellites SN, à un réseau de télécommunication fixe PSTN, et à an réseau de radiotéléphonie terrestre PLMN, du type GSM par exemple.

Le réseau de satellites SN comporte une constellation de satellites S1, S2, S3, ..., à moyenne altitude, et des stations terriennes ES1, ES2, ES3, .... Le station embarquée de chaque avion A1 ..., Ap, est à chaque instant en liaison avec un satellite. Les passagers établissent et reçoivent des communications via le réseau de satellites SN. Celui-ci voit chaque passager en cours de communication, comme un abonné fictif et temporaire de ce réseau SN. Le réseau SN est ainsi utilisé pour gérer la mobilité des passagers des avions A1, ..., Ap de la même façon qu'il gère la mobilité de n'importe quel abonné utilisant un terminal portable Irridium en n'importe quel point de la surface de la terre, pour téléphoner via ce réseau de satellites. Le réseau intermédiaire IFTSN, le réseau fixe PSTN, et le réseau de radiotéléphonie terrestre PLMN n'ont donc pas à gérer la mobilité de l'avion.

Le réseau intermédiaire IFTSN comporte une pluralité de noeuds N1, N2,..., et un réseau de transit TN reliant tous ces noeuds : entre eux, au réseau fixe PSTN, et au réseau radiotéléphonique terrestre PLMN. Les stations terriennes ES1, ES2, ES3 sont reliées entre elles, et par ailleurs la station ES1 est reliée au noeud N1 alors que les stations ES2 et ES3 sont reliées au noeud N2. Chaque noeud N1, N2, ... est une passerelle entre le réseau de satellites SN et les réseaux terrestres PSTN et PLMN.

Le réseau PLMN voit chaque noeud N1, N2, ..., comme une station de base fictive, et il voit chaque passager, en cours de communication, comme un abonné mobile fictif, du réseau PLMN, qui serait situé dans la zone desservie par une de ces stations de base fictives. Le réseau PSTN voit chaque passager, en cours de communication, comme un abonné à un autre réseau fixe qui serait géré par un autre opérateur. Le réseau intermédiaire IFTSN voit le réseau SN comme un réseau radiotéléphonique terrestre classique, sachant gérer lui-même la mobilité de ses abonnés.

Chaque avion bénéficie d'un groupe d'abonnements au réseau de satellites SN. Le nombre d'abonnements fixe le nombre des passagers qui pourront établir des communications simultanément. Chaque passager qui est en cours de communication est considéré comme un abonné fictif et temporaire du réseau SN, puisque c'est le transporteur qui est le titulaire réel et permanent de ces abonnements au réseau de satellites SN.

Dans d'autres exemples de réalisation, le réseau intermédiaire IFTSN peut ne comporter qu'un seul noeud.

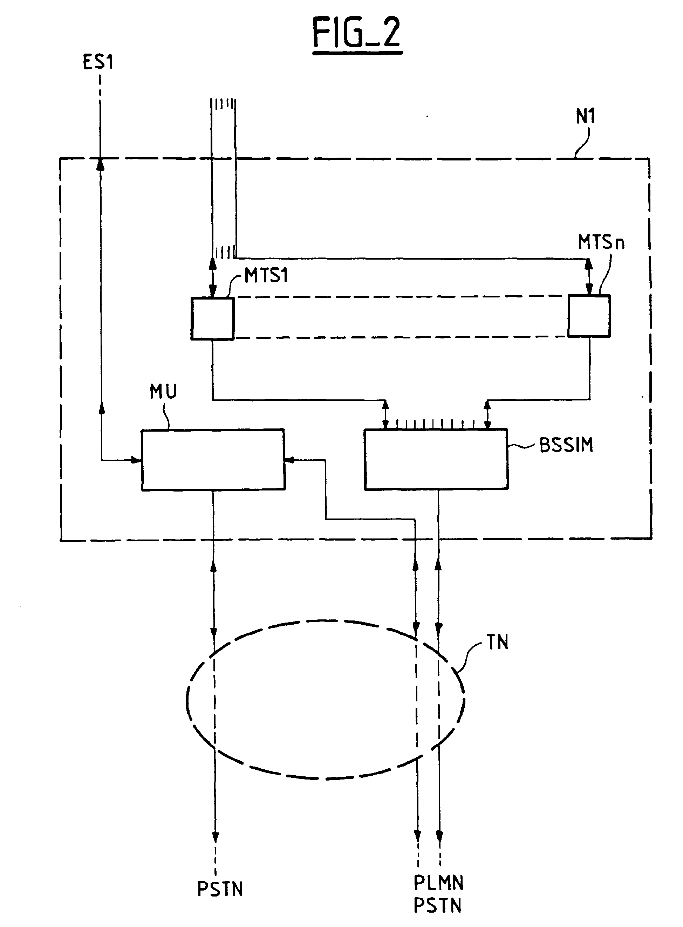

**La figure 2** représente le schéma synoptique d'un exemple de réalisation N1 du noeud selon l'invention. Il comprend :
- au moins un simulateur de station de base, BSSIM, couplé par le réseau de transit TN au réseau de radiotéléphonie terrestre PLMN, pour simuler le comportement d'une station de base de ce réseau de radiotéléphonie terrestre ;
- n simulateurs de terminal mobile MTS1,... , MTSn, reliés au simulateur de station de base, BSSIM, et reliés à la station terrienne ES1, pour simuler le comportement de n terminaux mobiles fictifs du réseau PLMN, qui resteraient en permanence dans la zone de cette station de base fictive, ces n simulateurs correspondant respectivement à n passagers en cours de communication ;
- et une unité MU de gestion du noeud N1, reliée à la station terrienne ES1 du réseau de satellites SN et couplée aux réseaux PSTN et PLMN par le réseau de transit TN .

Cette unité de gestion MU a pour fonction principale d'associer n numéros d'abonné du réseau de satellites SN à n passagers. Chacun de ces passagers est désigné par son numéro d'annuaire réel, soit d'un réseau radiotéléphonique terrestre, soit d'un réseau téléphonique fixe. Si un passager est un abonné à un réseau radiotéléphonique terrestre, et si son abonnement lui donne droit au service de téléphonie en vol via le réseau radiotéléphonique terrestre PLMN, le numéro d'annuaire de ce passager est associé en outre à l'un des simulateurs de terminaux mobiles MTS1, ..., MTSn.

Chaque simulateur de terminal mobile MTS1,... , MTSn est réalisé avec un processeur et :
- des moyens logiciels pour faire enregistrer dans les bases de données d'abonné du réseau de radiotéléphonie terrestre PLMN, à une adresse correspondant au numéro d'annuaire d'un passager, la présence d'un terminal mobile fictif dans la zone couverte par la station de base fictive correspondant au simulateur de base BSSIM, en vue de faire router vers ce simulateur tous les appels destinés à ce passager ;
- des moyens logiciels pour recevoir une demande d'établissement de communication provenant d'un passager, faire une demande d'établissement de communication dans le réseau de radiotéléphonie terrestre PLMN comme si elle provenait d'un terminal mobile de ce réseau de radiotéléphonie terrestre PLMN, et puis établir une communication avec l'avion transportant ce passager, via le réseau de satellites SN, quand la communication a été établie dans le réseau de radiotéléphonie terrestre PLMN ;
- et des moyens logiciels pour demander au réseau de satellites SN l'établissement d'une communication vers un passager, en le désignant par son numéro d'abonnement dans le réseau SN, lorsque ce simulateur reçoit un appel provenant du réseau PLMN et contenant le numéro d'annuaire de ce passager.

Le simulateur de station de base BSSIM comporte un processeur et :
- des moyens logiciels pour router vers un simulateur de terminal mobile MTSi tous les appels contenant le numéro d'annuaire désignant le passager correspondant à ce simulateur ;
- et des moyens logiciels pour router vers le réseau PLMN, respectivement le réseau PSTN, tous les appels provenant des simulateurs MTS1, ..., MTSn, et à destination de l'un de ces réseaux.

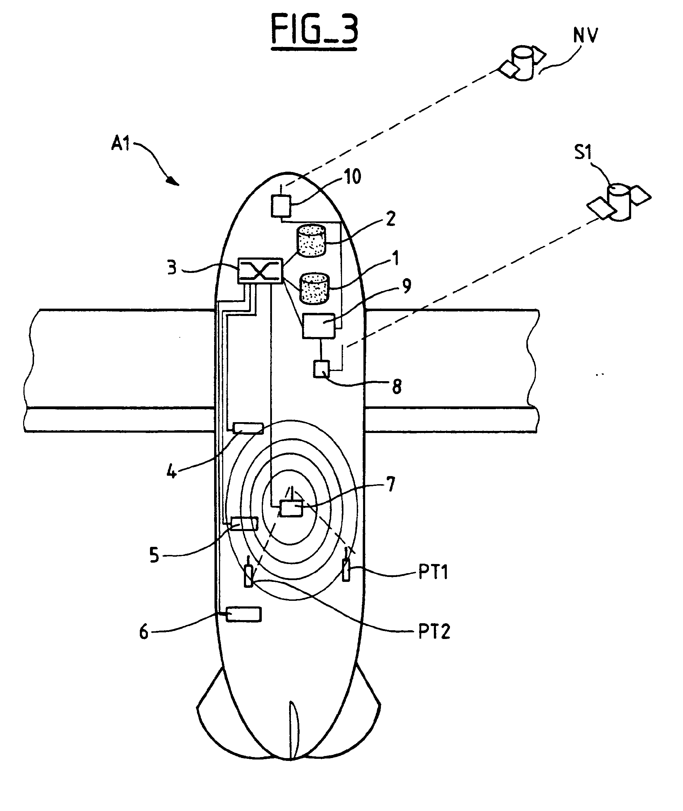

**La figure 3** représente le schéma synoptique d'un exemple de réalisation de la station embarquée selon l'invention, cette station étant installée à bord d'un avion A1 par exemple. Cette station embarquée comporte :
- des serveurs 1, 2 de distractions en vol pour fournir notamment de la vidéo à la demande ou en diffusion ;
- un commutateur 3 de trames de données de type Ethernet ;
- des concentrateurs 4, 5, 6,... de trames de données de type Ethernet, qui sont reliés d'une part à ce commutateur 3 et, d'autre part, à des terminaux voix-données intégrés aux sièges des passagers, non représentés ;
- une mini station de base 7, de type GSM, rayonnant uniquement dans la cabine de l'avion, pour permettre aux passagers d'utiliser leurs radiotéléphones GSM habituels, en dehors des phases de vol pendant lesquelles l'utilisation de radiotéléphones est interdite ;
- un émetteur-récepteur radio 8 pour établir une communication radio avec un satellite SI du réseau de satellites SN ;
- un processeur 9, relié à l'émetteur-récepteur 8, et jouant le rôle de passerelle vis à vis du réseau de satellites SN qui le voit comme un groupe d'abonnés mobiles fictifs de ce réseau SN, chaque passager déclaré, ayant pendant la durée du vol, un numéro d'abonné du réseau SN qui est associé à son numéro d'annuaire habituel.

Ces terminaux voix-données sont de préférence compatibles avec le protocole Internet et comportent : un écran, un clavier alphanumérique, et un combiné téléphonique ou une paire d'écouteurs munie d'un micro. Ils permettent de bénéficier de multiples services : téléphonie, accès à Internet, vidéo à la demande ou en diffusion, audio, service de cabine.

Dans l'hypothèse où il serait autorisé d'utiliser des radiotéléphones à bord des avions, à l'exclusion éventuellement de la phase de décollage et de la phase d'atterrissage, la mini station de base 7 permet d'établir une liaison avec des terminaux portatifs GSM. Ainsi, les passagers qui préfèrent utiliser leur terminal radiotéléphonique GSM personnel, peuvent l'utiliser notamment pour téléphoner. Cette mini station de base 7 a une structure classique, permettant d'utiliser des radiotéléphones GSM classiques dans la cabine de l'avion. Mais elle comporte en plus un dispositif de détection de la présence d'un radiotéléphone GSM, ou d'un autre type, qui est en fonctionnement dans la cabine. Ce dispositif de détection est activable par le personnel de cabine, pendant les périodes de décollage et d'atterrissage, pour signaler cette présence automatiquement (par une alarme sonore par exemple, ou une annonce pré-enregistrée). Ce dispositif permet ainsi de faire respecter efficacement une interdiction d'utiliser des terminaux radiotéléphoniques pendant les phases de décollage et d'atterrissage.

Pour être joignable, un passager doit faire enregistrer sa présence par le processeur 9 à bord de l'avion, et par l'unité de gestion du noeud N 1 qui gère les télécommunications avec cet avion. Plusieurs procédés sont utilisables :
- Les passagers qui ont avec eux leur terminal radiotéléphonique GSM personnel peuvent déclencher l'enregistrement de leur présence à bord en allumant ce terminal radiotéléphonique GSM personnel (en dehors de périodes de décollage et d'atterrissage). La mini station de base 7 signale cette présence au processeur 9 qui enregistre alors le numéro d'annuaire du passager dans une liste locale, puis qui le transmet à l'unité de gestion MU d'un noeud du réseau intermédiaire, N1 par exemple, pour qu'il associe un simulateur de terminal mobile à ce numéro d'annuaire.
- Les passagers qui n'ont pas leur radiotéléphone, ou qui ne veulent pas l'utiliser, ou qui ne sont pas autorisés à l'utiliser, peuvent déclencher l'enregistrement de leur présence à bord en allumant le terminal voix-données placé devant eux, et en choisissant une option dans un menu, et en saisissant leur numéro d'annuaire, s'ils sont abonnés à un réseau fixe, ou à un réseau radiotéléphonique terrestre, et si leur abonnement leur donne le droit de bénéficier de ce service de télécommunication à bord des avions. Optionnellement, un lecteur de carte SIM (Carte à puce, personnelle qu'on insère habituellement dans un radiotéléphone) peut être intégré à chaque terminal voix-données pour saisir automatiquement le numéro d'annuaire, et pour permettre l'utilisation de l'annuaire personnel.
- Un passager qui n'aurait aucun abonnement à un réseau terrestre, ou qui ne voudrait pas l'utiliser, pourrait demander un abonnement temporaire pour la durée du vol. Soit le transporteur se charge de gérer de tels abonnements dans un centre de facturation qui lui est propre, soit il propose aux passagers d'acheter des cartes prépayées comme les cartes classiques utilisables dans les cabines téléphoniques publiques. Les terminaux voix-données doivent alors comporter un lecteur de carte adéquat.
- Optionnellement, l'enregistrement du numéro d'annuaire de chaque passager pourrait être fait au moment où les cartes d'embarquement sont contrôlées. Le contrôle est fait par une machine. Il suffirait que cette machine soit munie d'un clavier pour que chaque passager puisse saisir son numéro d'annuaire. La machine lirait simultanément le numéro de siège sur la carte d'embarquement, ce qui permettrait de connaître ainsi quel terminal voix-données sera utilisé par le passager.

Dans tous les cas, le processeur 9 enregistre la présence de ces passagers, dans une liste, en désignant chacun par son numéro d'annuaire de réseau fixe ou de réseau radiotéléphonique terrestre. Il associe ce numéro d'annuaire à :
- un numéro disponible parmi les numéros d'abonné fictif du réseau de satellites SN, qui ont été attribués à cet avion ;
- à un numéro de siège (qui désigne le terminal voix-données utilisable par le passager) ;
- et à un compte des sommes dues pour ces services de distraction.

Il impute le coût de tous les services de distraction et de télécommunication utilisés par ce passager, sur le compte de l'abonnement téléphonique du passager, via des liaisons de signalisation du réseau SN et du réseau intermédiaire IFTSN. Il utilise les moyens de transmission de signalisation du réseau de satellites SN, du réseau intermédiaire IFTSN, et du réseau de radiotéléphonie terrestre PLMN, pour communiquer à un point de service gérant la facturation téléphonique pour ce passager, le numéro d'annuaire et le montant du compte de ce passager, en vue de facturer les services de distraction en même temps que la consommation téléphonique.

Dans l'hypothèse où le transporteur proposerait des abonnements temporaires sans carte prépayée, les données de facturations seraient transmises à un centre de facturation propre à ce transporteur.

L'unité de gestion MU et le processeur 9 communiquent pour enregistrer les mêmes données de gestion des communication. Quand le vol est terminé, le processeur 9 efface automatiquement les enregistrements de présence des passagers, dans ses propres mémoires et dans l'unité de gestion MU du noeud N1. Ces passagers peuvent alors recevoir de nouveau des appels directement sur leurs terminaux personnels à partir des réseaux radiotéléphoniques terrestres classiques.

## Revendications

1. Noeud permettant d'établir à tout moment une communication vers un passager d'un véhicule, ce véhicule (A1, ..., Ap) comportant une station embarquée (1-9) permettant de coupler des terminaux vocaux (PT1, PT2) et des terminaux de données (4, 5, 6) à un réseau de satellites (SN) ;
**caractérisé en ce qu'**il comporte un réseau intermédiaire (IFTSN) comportant au moins un noeud (N1) muni de moyens (MU) couplés au réseau de satellites (SN) et à au moins un réseau de télécommunication terrestre (PSTN, PLMN), pour associer, pour chaque passager d'un véhicule, un numéro d'annuaire de réseau de télécommunication terrestre (PSTN, PLMN) à un numéro d'annuaire du réseau de satellites (SN).

2. Noeud selon la revendication 1, **caractérisé en ce que**, pour associer un numéro d'annuaire de réseau de télécommunication radiotéléphonique terrestre (PLMN) à un numéro d'annuaire du réseau de satellites (SN), il comporte :
- au moins un simulateur de station de base (BSSIM) couplé à ce réseau de radiotéléphonie terrestre (PLMN), pour simuler le comportement d'une station de base fictive de ce réseau de radiotéléphonie terrestre (PLMN),
- et n simulateurs de terminaux mobiles (MTS1,... , MTSn), couplés à ce simulateur de station de base (BSSIM), pour simuler le comportement de n terminaux mobiles qui resteraient en permanence dans la zone de cette station de base, et qui correspondent à n passagers du véhicule (A1, ..., Ap) ; ces n simulateurs étant couplés à la station embarqués (1-9), par le réseau de satellites (SN) ; ces n simulateurs pouvant être appelés respectivement, via le réseau radiotéléphonique terrestre (PLMN) en utilisant le numéro d'annuaire de ces n passagers ; et ces n simulateurs retransmettant des appels respectivement vers n numéros d'abonné, du réseau de satellites (SN), respectivement associés à ces n numéros d'annuaire.

3. Station embarquée (1-9) permettant d'établir à tout moment une communication vers un passager d'un véhicule (A1, ..., Ap), cette station permettant de coupler, des terminaux vocaux (PT1, PT2) et des terminaux de données (4, 5, 6) situés dans le véhicule, à un réseau de satellites (SN) qui est lui-même couplé à un réseau de radiotéléphonie terrestre (PLMN) ;
**caractérisée en ce qu'**elle comporte :
- des moyens (9) pour mémoriser les numéros d'annuaire de passagers du véhicule, qui sont abonnés à un réseau de radiotéléphonie terrestre (PLMN), et leurs associer respectivement des numéros d'abonné du réseau de satellites (SN) ;
- et des moyens (3, 9) pour router un appel vers un passager, en fonction d'un numéro, d'abonné du réseau de satellites, qui est utilisé pour adresser cet appel.

4. Station embarquée selon la revendication 3, **caractérisée en ce que**, pour détecter la présence d'un terminal radiotéléphonique en fonctionnement, elle comporte des moyens (8, 9) pour recevoir les signaux émis par un tel terminal, et des moyens pour donner une alarme lorsqu'il détecte ces signaux.

## Claims

1. Node enabling a call involving a passenger on a vehicle to be set up at any time, said vehicle (A1 to Ap) including an onboard station (1-9) for connecting voice terminals (PT1, PT2) and data terminals (4, 5, 6) to a satellite network (SN);
**characterised in that** it includes an intermediate network (IFTSN) including at least one node (N1) having means (MU) connected to the satellite network (SN) and to at least one terrestrial telecommunication network (PSTN, PLMN) to associate a terrestrial telecommunication network (PSTN, PLMN) directory number with a satellite network (SN) directory number for each passenger on the vehicle.

2. Node according to claim 1, **characterised in that** it includes, for associating a terrestrial mobile telephone telecommunication network (PLMN) directory number with a satellite network (SN) directory number:
- at least one base station simulator (BSSIM) connected to said terrestrial mobile telephone network (PLMN) to simulate the behaviour of a dummy base station of said terrestrial mobile telephone network (PLMN), and
- n mobile terminal simulators (MTS1 to MTSn) connected to said base station simulator (BSSIM) to simulate the behaviour of n mobile terminals remaining at all times within the area of said base station and which correspond to n passengers in the vehicle (A1 to Ap), said n simulators being connected to the onboard station (1-9) via the satellite network (SN), being adapted to be called via the terrestrial mobile telephone network (PLMN) using the directory numbers of said n passengers, and retransmitting calls to n subscriber numbers of the satellite network (SN) respectively associated with said n directory numbers.

3. Onboard station (1-9) for setting up a call involving a passenger on a vehicle (A1 to Ap) at any time, said station enabling voice terminals (PT1, PT2) and data terminals (4, 5, 6) in the vehicle to be connected to a satellite network (SN) which is in turn connected to a terrestrial mobile telephone network (PLMN);
**characterised in that** it includes:
- means (9) for storing directory numbers of passengers in the vehicle who are subscribers to a terrestrial mobile telephone network (PLMN) and associating them with respective satellite network (SN) subscriber numbers, and
- means (3, 9) for routing a call to a passenger on the basis of a satellite network subscriber number used to route said call.

4. Onboard station according to claim 3, **characterised in that** it includes means (8, 9) for receiving signals transmitted by a mobile telephone terminal in use, in order to detect the presence of a mobile telephone terminal in use, and means for giving an alarm if it detects such signals.

## Patentansprüche

1. Knoten, der zu einem beliebigen Zeitpunkt die Herstellung einer Verbindung mit einem Fahrzeuginsassen ermöglicht, wobei dieses Fahrzeug (A1, ..., Ap) eine Bordstation (1-9) umfasst, die die Möglichkeit bietet, Sprachendgeräte (PT1, PT2) und Datenendgeräte (4, 5, 6) mit einem Satellitennetz (SN) zu verbinden;
**dadurch gekennzeichnet, dass** er ein zwischengeschaltetes Netz (IFTSN) umfasst, das mindestens einen Knoten (N1) umfasst, der mit Einrichtungen (MU) ausgerüstet ist, die mit dem Satellitennetz (SN) und mindestens einem terrestrischen Mobilfunknetz (PTSN, PLMN) gekoppelt sind, um für jeden Fahrzeuginsassen die Teilnehmernummer eines terrestrischen Mobilfunknetzes (PSTN, PLMN) einer Teilnehmernummer eines Satellitennetzes (SN) zuzuordnen.

2. Knoten gemäß Anspruch 1, **dadurch gekennzeichnet, dass** er Folgendes umfasst, um einer Teilnehmernummer eines terrestrischen Mobilfunknetzes (PLMN) eine Teilnehmernummer eines Satellitennetzes (SN) zuzuordnen:
- mindestens einen Basisstations-Simulator (BSSIM), der mit diesem terrestrischen Mobilfunknetz (PLMN) gekoppelt ist, um das Verhalten einer fiktiven Basisstation dieses terrestrischen Mobilfunknetzes (PLMN) zu simulieren,
- und n Simulatoren für mobile Endgeräte (MTS1, ..., MTSn), die mit diesem Basisstations-Simulator (BSSIM) gekoppelt sind, um das Verhalten von n mobilen Endgeräten zu simulieren, die sich dauerhaft im Abdeckungsbereich dieser Basisstation befinden und die n Fahrzeuginsassen (A1, ..., Ap) entsprechen, wobei diese n Simulatoren über das Satellitennetz (SN) mit der Bordstation (1-9) gekoppelt sind, wobei diese n Simulatoren jeweils über das terrestrische Mobilfunknetz (PLMN) angerufen werden können, indem die Teilnehmernummer dieser n Insassen verwendet wird, und wobei diese n Simulatoren die Anrufe jeweils an n Teilnehmernummern des Satellitennetzes (SN) zurückübertragen, die diesen n Teilnehmernummern jeweils zugeordnet sind.

3. Bordstation (1-9), die die Möglichkeit bietet, zu jedem beliebigen Zeitpunkt eine Verbindung mit einem Fahrzeuginsassen (A1, ..., Ap) herzustellen, wobei es diese Station ermöglicht, Sprachendgeräte (PT1, PT2) und Datenendgeräte (4, 5, 6), die sich in dem Fahrzeug befinden, mit einem Satellitennetz (SN) zu koppeln, das wiederum mit einem terrestrischen Mobilfunknetz (PLMN) gekoppelt ist,
**dadurch gekennzeichnet, dass** sie Folgendes umfasst:
- Einrichtungen (9) zur Speicherung der Teilnehmernummern der Fahrzeuginsassen, die Teilnehmer eines terrestrischen Mobilfunknetzes (PLMN) sind, und entsprechende Zuordnung von Teilnehmernummern des Satellitennetzes (SN);
- und Einrichtungen (3, 9) zur Weiterleitung eines Anrufs an einen Insassen in Abhängigkeit von der Teilnehmernummer eines Satellitennetzes, die zur Adressierung dieses Anrufs verwendet wird.

4. Bordstation gemäß Anspruch 3, **dadurch gekennzeichnet, dass** sie zur Erfassung der Anwesenheit eines eingeschalteten Mobilfunk-Endgeräts Einrichtungen (8, 9) zum Empfang der Signale umfasst, die von einem solchen Endgerät ausgestrahlt werden, sowie Einrichtungen, die Alarm geben, wenn diese Signale erfasst werden.
